# EUROPEAN PATENT SPECIFICATION

(11) **EP 1 970 130 B1**
(45) Date of publication and mention of the grant of the patent: **05.10.2011**
(21) Application number: 08152839.0
(22) Date of filing: 17.03.2008
(51) Int. Cl.: B07B 4/02, B07B 13/00, B29B 17/02

(54) **Apparatus and method for separating plastic film from waste**
Vorrichtung und Verfahren zur Trennung von Kunststofffolien aus Abfall
Appareil et procédé pour séparer des films plastiques de déchets

(30) Priority: 15.03.2007 US 918194 P; 15.03.2007 EP 07104284
(43) Date of publication of application: 17.09.2008
(73) Proprietor: MACHINEFABRIEK BOLLEGRAAF APPINGEDAM B.V., NL-9902 AM Appingedam (NL)
(72) Inventor: Legtenberg, Hermannus Johannes Maria, 9675 RD Winschoten (NL); Witting, Hendrik Huibert, 9617 AH Harkstede (NL)
(74) Representative: Hatzmann, Martin

(56) References cited:
- DE-C1- 3 940 669
- DE-U1- 9 218 369
- FR-A- 2 725 641
- JP-A- 2006 167 653
- US-A- 4 207 986

## Description

### FIELD AND BACKGROUND OF THE INVENTION

The invention relates to an apparatus according to the introductory portion of claim 1 and to a method according to the introductory portion of claim 8. Such an apparatus and such method for separating plastic film material from waste are known from JP-2006/167653.

Waste, other than specific types of industrial or agricultural waste generally contains substantial amounts of flexible plastics, such as film material of garbage bags and packaging material. For an effective recycling of plastic material, it is desirable to have such plastic film waste separated from the other waste. For the processing of categories of waste, it is desirable that the waste contains no or very little plastic film material.

In U.S. patent 4 207 986 apparatuses are disclosed in which plastic film material is separated from waste by bringing waste in contact with circulating hooks that engage plastic film material more than other material brought in contact with the hooks. The circulating hooks displace engaged film material away from the other waste and the engaged film material is subsequently disengaged from the hooks and transported away for further processing and storage.

In DE-C1-3940669 an apparatus for separating angel's hair is disclosed having a rotating drum with retractable spokes that engage angel's hair more than other material brought in contact with the hooks. The hooks are retracted while moving through the area where material is engaged.

### SUMMARY OF THE INVENTION

It is an object of the invention to achieve an effective separation of film material efficiently, by effectively engaging and disengaging film materials.

According to the invention, this object is achieved by providing an apparatus according to claim 1. The invention may also be embodied in a method according to claim 8.

Since the hooks are extended while moving through the engagement area where the material that is to be engaged reaches the circulation path of the hooks, effective and selective engagement of film material by the hooks is enhanced, because the hooks are to some extent "stabbed" into the film material to be engaged. Particular embodiments of the invention are set forth in the dependent claims.

Further features, effects and details of the invention are described with reference to an example shown in the drawings.

### BRIEF DESCRIPTION OF THE DRAWINGS

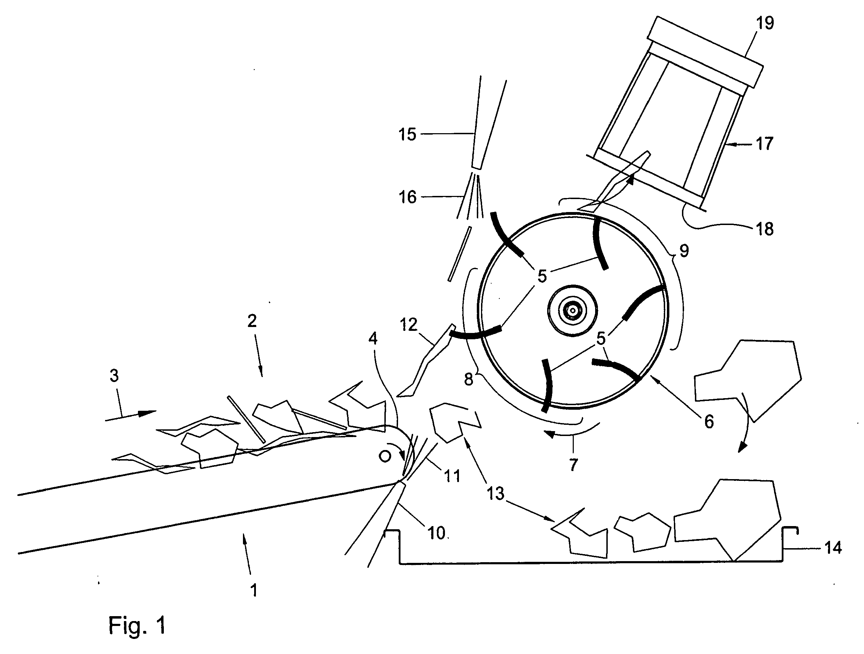

Fig. 1 is a schematic side view of an example of an apparatus according to the invention;
Fig. 2 is a schematic side view in cross-section of the apparatus shown in Fig. 1; and
Fig. 3 is a schematic side view of an alternative example of an apparatus according to the invention.

### DETAILED DESCRIPTION

The invention is first described with reference to the example shown in the drawings and the various alternative options within the framework of the invention are discussed.

The apparatus shown in the drawings is equipped with a supply track 1 for supplying waste. The supply track 1 extends in a supply direction (arrow 3) to a downstream end 4 thereof.

Hooks 5 are mounted on a hook carrier in the form of a drum 6 for circulating the hooks 5 in a sense of circulation (arrow 7) along a trajectory through an engagement area 8 near the supply track 1 and through a disengagement area 9 downstream of the engagement area 8.

A blower 10 is arranged for generating an upward airflow 11 in the vicinity of the downstream end 4 of the supply track 1 for blowing a fraction 12 of the waste 2 to the hooks 5 in the engagement area 8 (in the drawings only one hook 5 of a plurality of hooks in a row in axial direction of the drum 6 is visible).

The engagement area 8 is located higher than the supply track and in the supply direction 3 beyond the downstream end 4 of the supply track 1, such that, in operation, a remainder 13 of the waste 2 is passed by the trajectory of the hooks 5 without contacting the hooks 5.

Underneath the downstream end 4 of the supply track 1, the engagement area 8 and the disengagement area 9, a discharge conveyor 14 is arranged for transporting away the remainder 13 of the waste 2.

In operation, waste 2 is supplied along the supply track 1 in the supply direction 3 while the hooks 5 are circulated along a trajectory through the engagement area 8 and the disengagement area 9. The upward airflow 11, which does not need to be vertically upward, but may just have an upward directional component as in the present example, in the vicinity of the downstream end 4 of the supply track 1 causes the fraction 12 of the waste 2, which is easily entrained by an airflow and contains the plastic film material, to be diverged to the hooks 5 in the engagement area 8. The remainder 13 of the waste 2 passes by the hooks 5 without contacting the hooks 5.

By the upward airflow 11, a fraction 12 of the waste 2 that is easily entrained by an airflow, such as sheet material, is separated from the waste 2 and blown against the hooks 5 in the engagement area 8. Thus, in a simple manner a fraction 12 of the waste 2 containing the plastic sheet material is separated from the remainder 13 of the waste 2 and brought in contact with the hooks 5, where the relatively flexible plastic sheet material is engaged by the hooks 5 and other material, such as paper, is not engaged by the hooks 5 and allowed to drop back once it is outside the upward airflow 11. The remainder 13 of the waste does not contact the hooks 5 and is thus prevented from interfering with the procedure of sorting out plastic film material on the basis of its propensity to be engaged by the hooks 5 and drops onto the discharge conveyor 14.

According to the present example, the engagement area 8 is located closely beyond the downstream end 4 of the supply track 1. Furthermore, the blower 10 is arranged for generating the upward airflow 11 in the vicinity of the downstream end 4 of the supply track 1 and the engagement area 8 is located higher than the supply track 1 and in the supply direction 3 beyond the downstream end 4 of the supply track 1, such that, in operation, the remainder 13 of the waste drops from the downstream end 4 of the supply track 1 without contacting the hooks 5.

In the vicinity of the downstream end 4 of the supply track 1, and in particular downstream of the supply track 1, the upward airflow 11 is disturbed very little by the structure of the supply track and the easily entrained fraction 12 of the waste 2 separates out relatively easily from the remainder of the waste, because, in the stream of waste falling freely from the downstream end of the supply track 1, the waste to be entrained by the airflow is not clamped underneath other waste.

The easily entrained fraction 12 of the waste 2 will generally not only contain plastic film material, but also other thin walled materials, such as paper and cardboard. To counteract that such materials are also engaged by the hooks 5, the apparatus according to the present example is further equipped with a blower 15 for generating a counter airflow 16 along the hooks 5 in and downstream of the engagement area 8. The counter airflow 16 is directed in a direction with a component opposite to the direction of movement of the hooks through that airflow in and downstream of the engagement area 8 and blows material that is not effectively hooked-on by the hooks 5 off the hooks 5, so that at least a substantial portion of the paper and other non-plastic film material that initially clings to the hooks 5 is removed from the hooks 5 before it is entrained by the hooks 5 for processing with the plastic film material. As in the present example, the counter airflow 16 is preferably directed with a downward component.

The fraction 12 of the waste that is easily entrained by an airflow and that is hooked by one or more of the hooks 5 may be composed of not only plastic film material but also of other materials clinging to or held in the plastic film materials. For instance a garbage bag containing some garbage may be effectively hooked by the hooks 5. However, such impurities in the stream of sorted plastic film material may disturb the further processing of the sorted plastic film material.

To reduce the amounts of impurities in the sorted plastic film material, it is provided according to the present example, that the apparatus is equipped with a discharge channel 17 having an inlet 18 above the disengagement area 9 and with a ventilator 19 for generating an airflow through the disengagement area 9 towards the inlet 18 and through the discharge channel 17. Because the plastic film material is removed from the hooks 5 by generating an airflow through the disengagement area 9 and towards and through the discharge channel 17, items of plastic film material that hold or are connected to substantial amounts of impurities, such as garbage bags that contain at least some waste, will generally be too heavy to be entrained by the suction applied via the discharge channel 17. Such heavy items therefore drop down onto the discharge conveyor 14 and are not discharged with the sorted plastic film material.

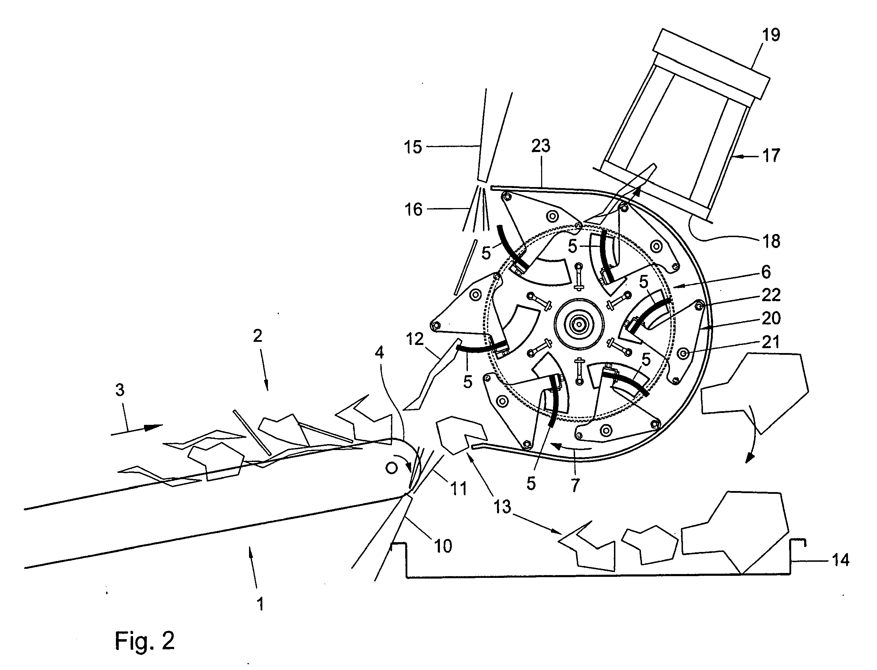

As is shown in Fig. 2, the hooks 5 project from the drum 6 via openings in the circumferential surface of the drum 6 and are retractable into a circumferential surface of the drum. By retracting the hooks in the disengagement area 9, disengagement of the material hooked onto the hooks is facilitated by stripping of the caught film material from the hooks. Furthermore, winding of waste material around the circulating hooks is prevented. Since the hooks 5 that are rotated along with the drum 6 are retracted, no separate members for stripping caught film material are required and the construction can be relatively light and simple and is suitable for rotation at relatively high rotational speeds. Moreover, the openings in the drum 6 via which the hooks 5 are retracted only need to be small so that the inside of the drum 6 is well shielded from the waste material.

To achieve and operate the retractability of the hooks, the hooks 5 are mounted to the drum 6 via double lever members 20, of which only one is designated by a reference numeral. Each time a row of hooks 5 extending in axial direction of the drum is carried by a pair of the double lever members that are mounted on opposite end faces of the drum 6 and are pivotable relative to the drum 6 about axes 21. Cam followers 22 are positioned for engagement by cam profiles 23 that are arranged axially outside of the drum 6. When a row of hooks 5 enters the disengagement area 9, the associated cam followers 22 contact the cam profile 23 and pushes the cam follower radially inwardly towards the axis of the drum as the cam follower moves along the cam profile 23. This causes the associated double levers 20 to pivot relative to the drum 6, so that the associated hooks 5 are retracted into the drum 6. When a row of hooks 5 approaches the engagement area 8, the associated cam followers 22 reach a section of the cam profile 23 of which the radial distance to the axis of the drum 6 increases in the rotational sense 7, so that the cam follower 22 is again allowed to move away from the axis of the drum 6 and does so under influence of springs (not shown) that bias the double lever members 20 into positions in which the hooks 5 project maximally from the drum 6. Because the hooks 5 are extended while moving through the engagement area 8 where the material 12 that is to be engaged selectively reaches the circulation path of the hooks 5, effective and selective engagement of film material by the hooks 5 is enhanced, because the hooks are to some extent "stabbed" into the film material to be engaged. Since the hooks 5 project from the drum 6 in the sense of circulation, extending the hooks 5 also causes the velocity of the hooks 5 in circumferential sense of the drum 6 to be increased temporarily, which is advantageous for more effectively engaging film material. A further advantage of extending the hooks 5 relatively late is that the likelihood that heavier material 13 that drops along the drum 6 is hit or caught by the hooks is reduced and/or the stream of heavier material passing 13 along the drum 6 can pass more closely along the drum 6.

The hooks 5 are curved about the pivot axes 21, so that narrowly fitting openings (gap width preferably smaller than 0,5 cm) in the circumference of the drum 6 are sufficient to allow the hooks to be extended and retracted. Because moreover the pivot axes are positioned forwardly in the sense of rotation 7 of the drum 6, the hooks 5 are curved in the sense of rotation 5, which is advantageous for reliably engaging plastic film material.

While the invention is described above with reference to an example, it will be readily apparent to the skilled person that within the framework of the inventions, many variants are conceivable. For instance, the hooks may be only partially retractable

Also, the discharge channel 17 for removing plastic film material from the hooks 5 by suction may be dispensed with, for instance if the purpose of removing plastic film material is mainly to clear the remainder of the waste from plastic film material. If the discharge channel 17 for removing plastic film material from the hooks 5 by suction is dispensed with, it is preferred that a separate discharge conveyor or chute is arranged for separately collecting and discharging all materials that have passed over the drum, for instance under a portion of the circumference of the drum facing away from the supply track.

The supply track 1 is in the form of a conveyor belt, but may also be provided in another form, such as in the form of a chute or a screw conveyor.

The engagement area where plastic film material is brought in contact with the hooks and engaged by the hooks may be positioned above the supply track instead of downstream of the downstream end 4 of the supply track 1 as shown in the present example. In such an embodiment, the blower for generating an upward airflow for blowing a fraction of the waste that is easily entrained by an airflow against the hooks will be located more upstream than in the example shown to blow through supply track. Separation of the easily entrained fraction of the waste may be facilitated by including agitators for agitating waste lying on the supply track in the area of the upward airflow.

The trajectory along which the hooks can be circulated does not need to be circular, but may for instance have an elongate shape.

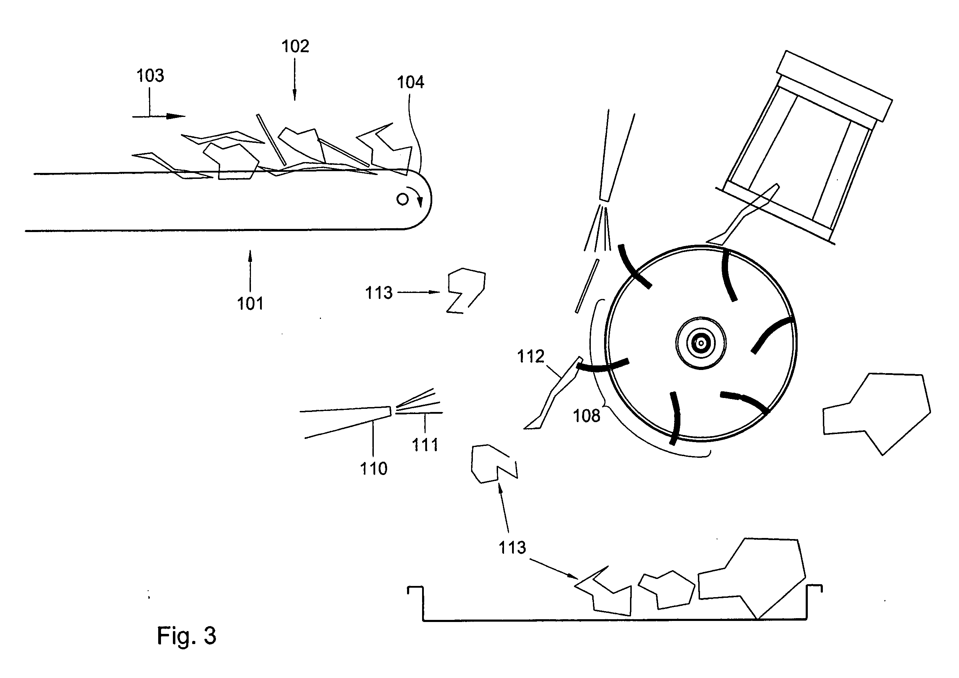

Fig. 3 shows an alternative example an apparatus according to the invention, wherein an engagement area 108 is located in a supply direction 103 beyond and below a downstream end 104 of a supply track 101. A blower 110 is arranged for blowing an easily entrained fraction 112 of waste 102 with a horizontal airflow 111 out of a stream of waste that drops from the downstream end 104 of the supply track 101. The easily entrained fraction 112 of the waste is blown against hooks in the engagement area 108. The remainder 113 of the waste drops further without contacting the hooks.

## Claims

1. An apparatus for separating plastic film material from waste (2), comprising:
a supply track (1; 101) for supplying waste (2), the supply track (1; 101) extending in a supply direction (3; 103) to its downstream end; and
a plurality of hooks (5) mounted on a drum (6) for circulating the hooks (5) along a trajectory through an engagement area (8; 108) near the supply track (1; 101) and through a disengagement area (9) downstream of the engagement area (8; 108);
wherein the engagement area (8; 108) is located higher than the supply track (1; 101) and/or in said supply direction (3; 103) beyond the downstream end of the supply track (1; 101), such that, in operation, material (12; 112) that is to be engaged selectively reaches the trajectory of the hooks (5) in the engagement area (8; 108) and a remainder of the waste (13; 113) passes by the trajectory of the hooks (5) without contacting the hooks (5);
**characterized in that** the hooks (5) project from the drum (6) via openings in the circumferential surface of the drum (6) and are retractable into a circumferential surface of the drum (6);
wherein the hooks (5) are coupled to the drum (6) so as to be extended while moving through the engagement area (8).

2. An apparatus according to claim 1, wherein the hooks (5) are mounted to the drum (6) via double lever members (20) that are pivotable relative to the drum (6) and carry cam followers (22) positioned for engagement by cam profiles (23) that are arranged axially outside of the drum (6).

3. An apparatus according to claims 1 and 2, wherein the cam profile (23) is shaped such that when a row of hooks (5) approaches the engagement area (8; 108), the associated cam followers (22) reach a section of the cam profile (23) of which the radial distance to the axis of the drum (6) increases in rotational sense (7), for allowing the cam follower (22) to move away from the axis of the drum (6).

4. An apparatus according to claim 2 or 3, wherein the hooks (5) are curved about pivot axes (21) about which the respective double lever members (20) are pivotable relative to the drum (6).

5. An apparatus according to claim 4, wherein pivot axes (21) about which the respective double lever members (20) are pivotable relative to the drum (6) are positioned forwardly in the sense of rotation (7) of the drum (6).

6. An apparatus according to any one of the preceding claims, further comprising a blower (10; 110) arranged for generating an upward airflow (11) through the supply track (1; 101) and/or in the vicinity of the downstream end of the supply track (1; 101) for blowing a fraction of the waste (12; 112) to the hooks (5) in the engagement area (8; 108).

7. An apparatus according to any one of the preceding claims, wherein the engagement area (8; 108) is located closely beyond the downstream end of the supply track (1; 101), wherein the blower (10; 110) is arranged for generating the upward airflow (11) in the vicinity of the downstream end of the supply track (1; 101) and wherein the engagement area (8; 108) is located higher than the supply track (1; 101) and/or in said supply direction (3; 103) from the downstream end of the supply track (1; 101), such that, in operation, the remainder of the waste drops from the downstream end of the supply track (1; 101) without contacting the hooks (5).

8. A method for separating plastic film material from waste, comprising:
supplying waste along a supply track (1; 101) in a supply direction (3; 103); and
circulating a plurality of hooks (6) along a trajectory through an engagement area (8; 108) near the supply track (1; 101) and through a disengagement area (9),
said engagement area being located higher than the supply track and/or in said supply direction beyond the downstream end of the supply track, such that, in operation, material that is to be engaged selectively reaches the trajectory of the hooks in the engagement area and a remainder of the waste passes by the trajectory of the hooks without contacting the hooks,
**characterized in that**, in each rotation of the drum (6), the hooks (5) are extended from the drum (6) into positions projecting via openings in the circumferential surface of the drum (6) and are retracted into the circumferential surface of the drum (6);
wherein the hooks (5) are extended while moving through the engagement area (8).

9. A method according to claim 8, further comprising generating an upward airflow (11) through the supply track (1; 101) and/or in the vicinity of the downstream end of the supply track (1; 101) causing a fraction of the waste (12; 112), containing the plastic film material, to be diverged to the hooks (5) in the engagement area (8; 108) from a remainder of the waste (13; 113), while the remainder of the waste (13; 113) passes by the hooks (5) without contacting the hooks (5).

10. A method according to claim 9, wherein the upward airflow (11) is generated in the vicinity of the downstream end of the supply track (1; 101) and wherein the remainder of the waste drops from the downstream end of the supply track (1; 101) without contacting the hooks (5).

## Patentansprüche

1. Vorrichtung zum Trennen von Kunststofffolienmaterial aus Abfall (2), die Folgendes aufweist:
eine Zuführbahn (1; 101) zum Zuführen von Abfall (2), wobei die Zuführbahn (1; 101) sich in eine Zuführrichtung (3, 103) zu ihrem ablaufseitigen Ende erstreckt; und
eine Vielzahl von Haken (5), die auf einer Trommel (6) zum Zirkulieren der Haken (5) entlang einer Bewegungsbahn durch einen Eingriffsbereich (8; 108) nahe der Zuführbahn (1; 101) und durch einen Freigabeabschnitt (9) ablaufseitig des Eingriffsbereichs (8; 108) montiert sind;
wobei der Eingriffsbereich (8; 108) höher als die Zuführbahn (1; 101) und/oder in der Zuführrichtung (3; 103) jenseits des ablaufseitigen Endes der Zuführbahn (1; 101) angeordnet ist, so dass im Betrieb in Eingriff zu bringendes Material (12; 112) wahlweise die Bewegungsbahn der Haken (5) in dem Eingriffsbereich (8; 108) erreicht und ein Rest des Abfalls (13; 113) durch die Bewegungsbahn der Haken (5) geht, ohne mit den Haken (5) in Verbindung zu treten;
**dadurch gekennzeichnet, dass** die Haken (5) von der Trommel (6) über Öffnungen in der Umfangsfläche der Trommel (6) vorstehen und in eine Umfangsfläche der Trommel (6) einziehbar sind;
wobei die Haken (5) an die Trommel (6) so gekoppelt sind, dass sie während des Bewegens durch den Eingriffsbereich (8) ausgestreckt werden.

2. Vorrichtung nach Anspruch 1, wobei die Haken (5) an der Trommel (6) über Doppelhebelelemente (20) montiert sind, die relativ zu der Trommel (6) schwenkbar sind und Nockenstößel (22) tragen, die für den Eingriff durch Nockenprofile (23) positioniert sind, die axial außerhalb der Trommel (6) angeordnet sind.

3. Vorrichtung nach Anspruch 1 und 2, wobei das Nockenprofil (23) so geformt ist, dass, wenn sich eine Reihe Haken (5) dem Eingriffsbereich (8; 108) nähert, die zugehörigen Nockenstößel (22) einen Abschnitt des Nockenprofils (23) erreichen, dessen radialer Abstand zu der Achse der Trommel (6) in Rotationsrichtung (7) ansteigt, um dem Nockenstößel (22) zu erlauben, sich von der Achse der Trommel (6) weg zu bewegen.

4. Vorrichtung nach Anspruch 2 oder 3, wobei die Haken (5) um Schwenkachsen (21) gebogen sind, um die die jeweiligen Doppelhebelelemente (20) relativ zu der Trommel (6) schwenkbar sind.

5. Vorrichtung nach Anspruch 4, wobei die Schwenkachsen (21), um die die jeweiligen Doppelhebelelemente (20) relativ zu der Trommel (6) schwenkbar sind, in Drehrichtung (7) vor der Trommel (6) positioniert sind.

6. Vorrichtung nach einem der vorangegangenen Ansprüche, ferner mit einem Gebläse (10; 110), das zum Erzeugen eines aufwärts gerichteten Luftstroms (11) durch die Zuführbahn (1; 101) und/oder in der Nähe des ablaufseitigen Endes der Zuführbahn (1; 101) angeordnet ist, um einen Bruchteil des Abfalls (12, 112) zu den Haken (5) in dem Eingriffsbereich (8; 108) zu blasen.

7. Vorrichtung nach einem der vorangegangenen Ansprüche,
wobei der Eingriffsbereich (8; 108) dicht jenseits des ablaufseitigen Endes der Zuführbahn (1; 101) liegt, wobei das Gebläse (10; 110) zum Erzeugen des aufwärts gerichteten Luftstroms (11) in der Nähe des ablaufseitigen Endes der Zuführbahn (1; 101) angeordnet ist, und wobei der Eingriffsbereich (8; 108) höher als die Zuführbahn (1; 101) und/oder in der Zuführrichtung (3; 103) von dem ablaufseitigen Ende der Zuführbahn (1; 101) liegt, so dass im Betrieb der Rest des Abfalls von dem ablaufseitigen Ende der Zuführbahn (1; 101) abfällt, ohne mit den Haken (5) in Verbindung zu treten.

8. Verfahren zum Trennen von Kunststofffolienmaterial aus Abfall, das folgende Schritte aufweist:
Zuführen von Abfall entlang einer Zuführbahn (1; 101) in einer Zuführrichtung (3; 103); und
Zirkulieren einer Vielzahl von Haken (5) entlang einer Bewegungsbahn durch einen Eingriffsbereich (8; 108) nahe der Zuführbahn (1; 101) und durch einen Freigabebereich (9), wobei der Eingriffsbereich höher als die Zuführbahn und/oder in der Zuführrichtung jenseits des ablaufseitigen Endes der Zuführbahn liegt, so dass im Betrieb in Eingriff zu bringendes Material wahlweise die Bewegungsbahn der Haken in dem Eingriffsbereich erreicht und ein Rest des Abfalls durch die Bewegungsbahn der Haken geht, ohne mit den Haken in Verbindung zu treten,
**dadurch gekennzeichnet, dass** bei jeder Drehung der Trommel (6) die Haken (5) von der Trommel (8) in über Öffnungen in der Umfangsfläche der Trommel (6) vorstehende Positionen ausgestreckt werden und in die Umfangsfläche der Trommel (6) eingezogen werden;
wobei die Haken (5) ausgestreckt werden, während sie sich durch den Eingriffsbereich (8) bewegen.

9. Verfahren nach Anspruch 8, das ferner den Schritt aufweist, einen aufwärts gerichteten Luftstrom (11) durch die Zuführbahn (1; 101) und/oder in der Nähe des ablaufseitigen Endes der Zuführbahn (1; 101) zu erzeugen, der bewirkt, dass ein Bruchteil des Abfalls (12; 112), der das Kunststofffolienmaterial enthält, zu den Haken (5) in dem Eingriffsbereich (8; 108) von einem Rest des Abfalls (13; 113) abgezweigt wird, während der Rest des Abfalls (13; 113) durch die Haken (5) geht, ohne mit den Haken (5) in Verbindung zu treten.

10. Verfahren nach Anspruch 9, wobei der aufwärts gerichtete Luftstrom (11) in der Nähe des ablaufseitigen Endes der Zuführbahn (1; 101) erzeugt wird, und wobei der Rest des Abfalls von dem stromabseitigen Ende der Zuführbahn (1; 101) abfällt, ohne mit den Haken (5) in Verbindung zu treten.

## Revendications

1. Appareil pour séparer un matériau de film plastique des déchets (2), comprenant :
un rail d'alimentation (1 101) pour amener les déchets (2), le rail d'alimentation (1; 101) s'étendant dans une direction d'alimentation (3 ; 103) jusqu'à son extrémité en aval ; et
une pluralité de crochets (5) montés sur un tambour (6) pour faire circuler les crochets (5) le long d'une trajectoire passant par une zone de mise en prise (8 ; 108) à proximité du rail d'alimentation (1; 101) et une zone de dégagement (9) en aval de la zone de mise en prise (8 ; 108) ;
dans lequel la zone de mise en prise (8 ; 108) est plus haute que le rail d'alimentation (1 ; 101) et/ou dans ladite direction d'alimentation (3 ; 103) au-delà de l'extrémité en aval du rail d'alimentation (1 ; 101), ainsi, en fonctionnement le matériau (12, 112) qui doit être sélectivement mis en prise, atteint la trajectoire des crochets (5) dans la zone de mise en prise (8 ; 108) et une partie résiduelle des déchets (13 ; 113) passe par la trajectoire des crochets (5) sans entrer en contact avec les crochets (5) ;
**caractérisé en ce que** les crochets (5) font saillie du tambour (6) via des ouvertures dans la surface circonférentielle du tambour (6) et sont rétractables dans une surface circonférentielle du tambour (6) ; et
dans lequel les crochets (5) sont couplés au tambour (6) afin d'être étendus tout en se déplaçant à travers la zone de mise en prise (8).

2. Appareil selon la revendication 1, dans lequel les crochets (5) sont montés sur le tambour (6) via des doubles éléments de levier (20) qui peuvent pivoter par rapport au tambour (6) et supportent des poussoirs de came (22) positionnés pour la mise en prise par des profils de came (23) qui sont agencés de manière axiale à l'extérieur du tambour (6).

3. Appareil selon les revendications 1 et 2, dans lequel le profil de came (23) est formé de sorte que lorsqu'une rangée de crochets (5) s'approche de la zone de mise en prise (8 ; 108), les poussoirs de came (22) associés atteignent une section du profil de came (23) dont la distance radiale jusqu'à l'axe du tambour (6) augmente dans le sens de rotation (7), pour permettre au poussoir de came (22) de s'éloigner de l'axe du tambour (6).

4. Appareil selon la revendication 2 ou 3, dans lequel les crochets (5) sont incurvées autour des axes de pivot (21) autour desquels les doubles éléments de levier (20) respectifs peuvent pivoter par rapport au tambour (6).

5. Appareil selon la revendication 4, dans lequel les axes de pivot (21) autour desquels les doubles éléments de levier (20) respectifs peuvent pivoter par rapport au tambour (6) sont positionnés vers l'avant dans le sens de rotation (7) du tambour (6).

6. Appareil selon l'une quelconque des revendications précédentes, comprenant en outre un souffleur (10 ; 110) agencé pour générer un écoulement d'air ascendant (11) à travers le rail d'alimentation (1; 101) et/ou à proximité de l'extrémité en aval du rail d'alimentation (1 ; 101) pour souffler une partie des déchets (12 ; 112) vers les crochets (5) dans la zone de mise en prise (8 ; 108).

7. Appareil selon l'une quelconque des revendications précédentes, dans lequel la zone de mise en prise (8 ; 108) est positionnée étroitement au-delà de l'extrémité en aval du rail d'alimentation (1 ; 101), dans lequel le souffleur (10 ; 110) est agencé pour générer l'écoulement d'air ascendant (11) à proximité de l'extrémité en aval du rail d'alimentation (1 ; 101) et dans lequel la zone de mise en prise (8 ; 108) est plus haute que le rail d'alimentation (1 ; 101) et/ou dans ladite direction d'alimentation (3 ; 103) à partir de l'extrémité en aval du rail d'alimentation (1 ; 101) de sorte qu'en fonctionnement, la partie résiduelle des déchets tombe de l'extrémité en aval du rail d'alimentation (1 ; 101) sans entrer en contact avec les crochets (5).

8. Procédé pour séparer un matériau de film plastique des déchets, comprenant les étapes consistant à :
alimenter les déchets le long d'un rail d'alimentation (1; 101) dans une direction d'alimentation (3 ; 103) ; et
faire circuler une pluralité de crochets (5) le long d'une trajectoire passant par une zone de mise en prise (8 ; 108) à proximité du rail d'alimentation (1 ; 101) et par une zone de dégagement (9), ladite zone de mise en prise étant plus haute que le rail d'alimentation et/ou dans ladite direction d'alimentation au-delà de l'extrémité en aval du rail d'alimentation de sorte qu'en fonctionnement, le matériau qui doit être sélectivement mis en prise, atteint la trajectoire des crochets dans la zone de mise en prise et une partie résiduelle des déchets passe par la trajectoire des crochets sans entrer en contact avec les crochets,
**caractérisé en ce que**, dans chaque rotation du tambour (6), les crochets (5) sont étendus à partir du tambour (6) dans des positions faisant saillie via les ouvertures dans la surface circonférentielle du tambour (6) et sont rétractés dans la surface circonférentielle du tambour (6) ;
dans lequel les crochets (5) sont étendus tout en se déplaçant dans la zone de mise en prise (8).

9. Procédé selon la revendication 8, comprenant en outre l'étape consistant à générer un écoulement d'air ascendant (11) dans le rail d'alimentation (1; 101) et/ou à proximité de l'extrémité en aval du rail d'alimentation (1; 101), amenant une partie des déchets (12 ; 112) contenant le matériau de film plastique à être déviée vers les crochets (5) dans la zone de mise en prise (8 ; 108) du reste des déchets (13 ; 113), alors que la partie résiduelle des déchets (13 ; 113) passe par les crochets (5) sans entrer en contact avec les crochets (5).

10. Procédé selon la revendication 9, dans lequel l'écoulement d'air ascendant (11) est généré à proximité de l'extrémité en aval du rail d'alimentation (1 ; 101) et dans lequel le reste des déchets tombe de l'extrémité en aval du rail d'alimentation (1 ; 101) sans entrer en contact avec les crochets (5).
